# EUROPÄISCHE PATENTSCHRIFT

(11) **EP 1 843 029 B1**
(45) Veröffentlichungstag und Bekanntmachung des Hinweises auf die Patenterteilung: **16.06.2010**
(21) Anmeldenummer: 07003823.7
(22) Anmeldetag: 24.02.2007
(51) Int. Cl.: F02F 7/00

(54) **Gebautes Kurbelgehäuse**
Composite cylinder case
Carter composité

(30) Priorität: 07.04.2006 DE 102006016820; 15.09.2006 DE 102006043421
(43) Veröffentlichungstag der Anmeldung: 10.10.2007
(73) Patentinhaber: KS Aluminium-Technologie GmbH, 74172 Neckarsulm (DE)
(72) Erfinder: Möding, Herbert, Dr., 74177 Bad Friedrichshall (DE); Ziegler, Steffen, 74193 Schwaigern (DE)
(74) Vertreter: Patentanwälte ter Smitten

(56) Entgegenhaltungen:
- EP-A- 0 767 315
- EP-A- 0 987 426
- DE-A1- 19 604 547
- JP-A- 2000 205 037

## Beschreibung

Die Erfindung betrifft ein Zylinderkurbelgehäuse aus Leichtmetall, insbesondere für Brennkraftmaschinen, mit einem Verstärkungsteil aus einem einzigen den Lagerstuhlbereich bildenden Eingussteil oder einzelnen den Lagerstuhlbereich bildenden Eingussteilen, das oder die in das Zylinderkurbelgehäuse eingegossen ist oder sind, wobei das Verstärkungsteil aus einem gegenüber dem Grundwerkstoff des Zylinderkurbelgehäuse eine höhere Festigkeit aufweisenden Werkstoff gebildet ist.

Herkömmliche Bauweisen von Zylinderkurbelgehäusen, die auch als Motorblöcke bezeichenbar sind, sind in der Veröffentlichung: "Die Bibliothek der Technik, Band 278, Aluminium-Motorblöcke vom Verlag Moderne Industrie aus dem Jahre 2005" mit ihren spezifischen Besonderheiten beschrieben. Bei der einteiligen Bauweise besitzt der Motorblock tief unter die Kurbelwellenachse heruntergezogene Seitenwände. Das Kurbelgehäuse ist hierbei nach unten offen und die Lagerstühle sowie die kurbelraumseitigen Wände sind zumindest prinzipiell schwingungsanfällig. Höheren Steifigkeitsanforderungen genügt die zweiteilige Bauweise in Form eines Motorblockoberteils und eines als Bed-plate bezeichneten Unterteils. Die Trennfläche befindet sich auf Höhe der Kurbelwellenachse. Das Bed-plate ist in seiner einfachsten Form ein einem leiterförmigen Rahmen ähnliches Versteifungselement. Es übernimmt im Bereich der Lagergasse die Funktion herkömmlicher Lagerdeckel. Zur Kompensation des gegenüber der Kurbelwelle doppelt so großen Wärmeausdehnungskoeffizienten werden in diesem Bereich Verstärkungen, meist aus Sphäroguss (GGS), eingegossen. Als Sonderbauformen von Motorblöcken ist das Aussparen und Ersetzen der Lagerstühle durch eine gebaute Konstruktion aus Gusseisen bekannt. Bei einer Trennung des Bauteils in ein Zylinderblockoberteil aus Aluminium und ein Kurbelgehäuseunterteil aus Grauguss geht der Gewichtsvorteil von Aluminium weitgehend verloren. Vorteilhafter sind Verbundgusslösungen mit Eingussteilen aus Gusseisen.

Eine Verbundgusslösung eines Zylinderkurbelgehäuses aus Leichtmetall ist aus der DE 198 10 464 C1 bekannt. Hierin werden höherfeste Lagerstühle und Lagerdeckel als Eingussteile vorgeschlagen. Die Lagerstühle tragen dabei sowohl Gewindebohrungen für die Lagerschrauben der Kurbelwellenlagerung als auch Gewindebohrungen für die Befestigungsschrauben der Zylinderköpfe. Die besagten Eingussteile sind unter anderem bei einem Zylinderkurbelgehäuse aus höherfesten Eisenwerkstoffen, wie zum Beispiel GGV, GGG 50, GGG 70, etc., hergestellt.

Aus der DE 102 05 958 A1 ist ein Verfahren zur Herstellung eines Leichtmetallbauteils mit einem Eingussteil, wobei das Eingussteil eine mit Metall infilltrierte poröse Keramik ist, bekannt. Darüber hinaus ist in der DE 102 21 674 A1 ein Verfahren zum Herstellen eines Zylinderkurbelgehäuses beschrieben, in dem die Zylinderlaufeinheit als ein erstes separates Eingussteil gegossen und anschließend mit dem Werkstoff des Lagerstuhls umgossen wird.

Eine weitere Verbundgusslösung eines Zylinderkurbelgehäuses ist in der DE 102 46 522 B3 beschrieben. Beschrieben ist ein Zylinderkurbelgehäuse aus Leichtmetall mit aus höherfesten Eingussteilen gebildeten Lagerstühlen und Lagerdeckeln zur Lagerung der Kurbelwelle, wobei die Eingussteile mittels Lagerschrauben zusammengespannt sind, wobei die Lagerschrauben mit zumindest einem oberhalb der Lagerstühle angeordnetem weiteren Eingussteil verschraubt sind und dementsprechend die Lagerstühle unter Druckspannung im Kurbelgehäuse beaufschlagen und das weitere Eingussteil ein Zylinderliner mit entsprechend angeformten Schraubenpfeifen für die Lagerschrauben ist. Beispielhaft wird ebenfalls ein aus einem Bed-plate Konzept bestehendes Zylinderkurbelgehäuse dargestellt. Hierbei sind in das Eingussteil des Kurbelgehäuses Durchgangsöffnungen eingebracht, durch die die Lagerschrauben hindurchreichen und mit dem Zylinderliner verschraubt sind.

Ausgehend von dem genannten Stand der Technik liegt der Erfindung die Aufgabe zugrunde, einen funktions- und festigkeitsoptimierten Einsatz von Werkstoffen in Verbundgusskonstruktionen von Zylinderkurbelgehäusen zu ermöglichen, darüber hinaus das Recycling, insbesondere im Vergleich zu Aluminium-Magnesium-Verbund-Lösungen zu verbessern, einen Gewichtsvorteil gegenüber einteiligen Aluminium-Zylinderkurbelgehäusen zu erreichen, eine kostengünstige Fertigung zu ermöglichen und aufgrund idealer Werkstoffpaarungen ein Zylinderkurbelgehäuse zu entwickeln, das uneingeschränkt dieselfähig ist.

Die erfindungsgemäße Aufgabe wird dadurch gelöst, dass das Zylinderkurbelgehäuse aus einem separaten Zylinderblock und einem oberen Kurbelgehäuse gebildet ist. Durch die Erfindung wird ein gebautes, zweiteiliges Kurbelgehäuse mit horizontaler Teilung unterhalb der Zylinderlaufflächen, bei der die Zylinderlaufflächen-Wasserraumeinheit und die Kurbelraumeinheit getrennt gefertigt sind, bereitgestellt. Die Zylinderlaufflächen-Wasserraumeinheit wird auf Aluminiumbasis vorzugsweise im Niederdruck oder Squeeze-Casting-Verfahren mit vorzugsweise einem Anschnitt auf das Zylinderrohr monolithisch (Alusil) oder quasimonolithisch (Lokasil) hergestellt und ist im Wesentlichen dünnwandig. Die Kurbelraumeinheit beinhaltet Verstärkungselemente aus Grau-, Stahl- oder Kugelgraphitguss, die mit einer Aluminium- und/oder Magnesiumlegierung umgossen wird. Die Verstärkungselemente sind entweder lokal im Lagerstuhl angeordnet oder bilden einen Körper, der sich in der Art eines Leiterrahmens durch das gesamte Kurbelgehäuse erstreckt. Die Verstärkungselemente können mit einteiliger Lagergasse gegossen werden.

Durch den erfindungsgemäßen Aufbau eines Zylinderkurbelgehäuses ist es nun möglich, im Bereich der Lagergasse und in Bezug auf die obere Kurbelraumeinheit eine höherfeste Legierung einzusetzen. Damit wird im Bereich des Lagerstuhls eine höhere Festigkeit erzielt. Weiter ist es möglich, ein oder mehrere Verstärkungselemente einzugießen. Diese höhere Festigkeit der Verstärkungsteile dient einerseits dazu, einen Eingusskörper in der Kurbelraumeinheit bereitzustellen, in dem die Gewinde für die Verschraubung der Zylinderlaufflächen-Wasserraumeinheit und andererseits Gewinde für den Lagerdeckel enthalten. Das Verstärkungselement in der Kurbelraumeinheit dient hierbei zur Aufnahme sämtlicher Verschraubungskräfte, Zylinderlaufflächen-Wasserraumeinheit und/oder Zylinderkopf und/oder Lagerdeckel, etc., so dass sich eine extrem steife Einheit ausbildet. In einer weiteren Ausführungsform der Erfindung wird vorgeschlagen, in das Versteifungselement Durchgangsöffnungen einzubringen, so dass die Zylinderlaufflächen-Wasserraumeinheit unmittelbar mit dem Lagerdeckel verschraubbar ist. Kombinationen von in das Verstärkungselement eingebrachten Gewinden und Durchgangsöffnungen sind erfindungsgemäß ebenfalls vorstellbar.

Neben dem Vorteil der Aufnahme der Verschraubungskräfte durch das Verstärkungsteil bildet das Verstärkungsteil gleichzeitig die Lagergasse zur Aufnahme der Kurbelwelle. Die erfindungsgemäß beanspruchten Werkstoffe besitzen sämtlichst einen geringeren Wärmeausdehnungskoeffizienten als der Grundwerkstoff des Zylinderkurbelgehäuses. Ein derartiger geringer Wärmeausdehnungskoeffizient bewirkt vorteilhaft, dass die Vergrößerung des Lagerspiels der Kurbelwellenlagerung im Wesentlichen vermieden werden kann. So wird durch den geringen Wärmeausdehnungskoeffizienten vermieden, dass sich die Hauptlagerbohrung zu sehr ausdehnt, wodurch die Kurbelwelle geräuscharmer umlaufen kann, so dass der Motor insgesamt leiser läuft.

Nachfolgend wird die Erfindung anhand von Ausführungsbeispielen näher erläutert. Es zeigt:
- Figur 1: den Schnitt durch ein erfindungsgemäß ausgestaltetes Zylinderkurbelgehäuse im Bereich einer Lagerstelle der Kurbelwelle im seitlichen Schnitt,
- Figur 2: ebenfalls einen seitlichen Querschnitt durch das Zylinderkurbelgehäuse im Bereich einer Lagerstelle der Kurbelwelle mit einem Versteifungselement in der oberen Kurbelraumeinheit,
- Figur 3: einen Schnitt durch ein erfindungsgemäß ausgestaltetes Zylinderkurbelgehäuse mit Verstärkungselement und Lagerdeckel,
- Figur 4: ein Verstärkungselement,
- Figur 5: ein weiteres Verstärkungselement,
- Figur 6: ein nach dem Trennen verbundenes und eingegossenes Verstärkungselement und
- Figur 7: eine Detailansicht einer Verbindung des Verstärkungsteils gemäß der Figur 6.

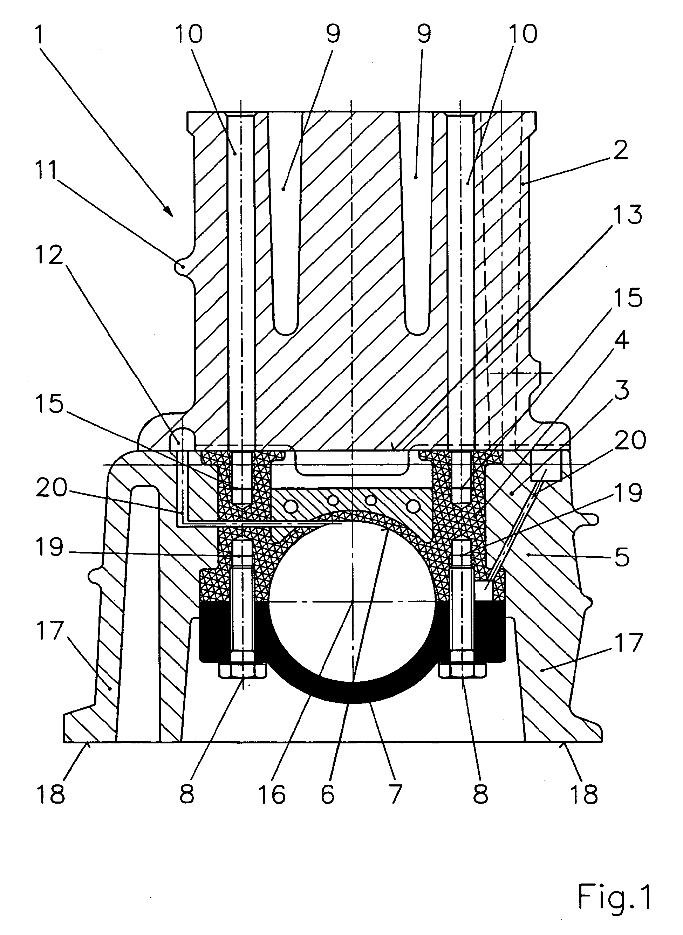

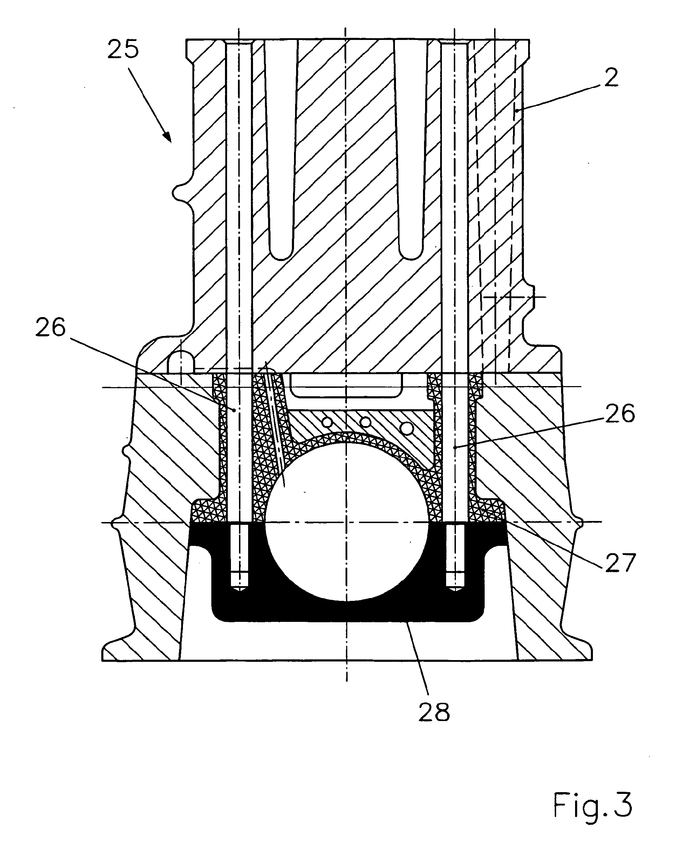

Die Figur 1 zeigt einen Schnitt durch eine Seitenansicht eines gebauten, zweiteiligen Kurbelgehäuses 1 mit einer Zylinderlaufflächen-Wasserraumeinheit 2 und einer oberen Kurbelraumeinheit 3. Die Kurbelraumeinheit 3 besteht hierbei aus einem ersten, den Lagerstuhl bildenden hochfesten Verstärkungsteil 4, das von einem Aluminium und/oder Magnesiumwerkstoff 5 umgossen ist. Das Verstärkungsteil 4 und der Umguss 5 bilden die obere Kurbelraumeinheit 3, wobei das Verstärkungsteil 4 gleichzeitig den Lagerstuhl 6 der nicht dargestellten Kurbelwelle bildet. Separat anschraubbar ist hierbei ein Lagerdeckel 7, der entweder mittels separater Lagerschrauben 8 gehalten ist oder gemäß der Figur 3 mittels durchgängiger Schrauben mit der Zylinderlaufflächen-Wasserraumeinheit 2 und der Kurbelraumeinheit 3 verbunden ist.

In der Figur 1 ist die Zylinderlaufflächen-Wasserraumeinheit, die auch als Zylinderblock 2 des Zylinderkurbelgehäuses 1 bezeichenbar ist, im Schnitt im Bereich zwischen den Zylindern dargestellt. Zu erkennen sind die Kühlräume 9 sowie die Durchgangslöcher 10 zur Verschraubung des Zylinderblocks 2 mit der oberen Kurbelraumeinheit 3. Je nach Ausführungsform sind am Zylinderblock 2 Kühlrippen 11 und Ölführungen 12 vorgesehen. Die Trennfläche 13 liegt unmittelbar unterhalb der Zylinderbohrungen, so dass eine optimale Ausnutzung von Gewichtsersparnis, durch Auswahl einer Leichtmetalllegierung für den Zylinderblock 2 und einer hochfesten Kurbelraumeinheit 3 gewährleistet ist. Die Kurbelraumeinheit 3 nimmt hierbei die Gewinde 15 zur Verschraubung des separat gefertigten Zylinderblocks 2 auf.

Die obere Kurbelraumeinheit 3 besitzt tief unter die Kurbelwellenachse 16 heruntergezogene Seitenwände 17, so dass das vorliegende Zylinderkurbelgehäuse 1 einer Schürzenbauweise entspricht. Auch wenn nicht ausdrücklich benannt, so gibt die Erfindung selbstverständlich auch für als Bed-plate ausgefüllte Zylinderkurbelgehäuse. Im Bereich 18 werden weitere Bauteile montiert, wie beispielsweise eine Ölwanne. Die Lagergasse zur Aufnahme der Kurbelwelle wird aus dem Verstärkungselement 4, das als separate Lagerschale 4 in die obere Kurbelraumeinheit 3 eingegossen werden kann und dem Lagerdeckel 7 gebildet. Darüber hinaus ist es ebenfalls vorstellbar, das Verstärkungselement als durchgängiges Eingussteil 4 in das obere Kurbelgehäuse 3 einzugießen. Ebenso ist es vorstellbar, separate Lagerdeckel an das obere Kurbelgehäuse 3 anzuschrauben oder einen leiterförmigen Rahmen 7 an das Verstärkungselement 4 anzuschrauben. Das Verstärkungselement 4 besitzt Gewinde 19, in die die Lagerschrauben 8 zur Befestigung der Lagerdeckel 7 einschraubbar sind. In das obere Kurbelgehäuse sind zusätzlich Ölführungen 20 eingebracht.

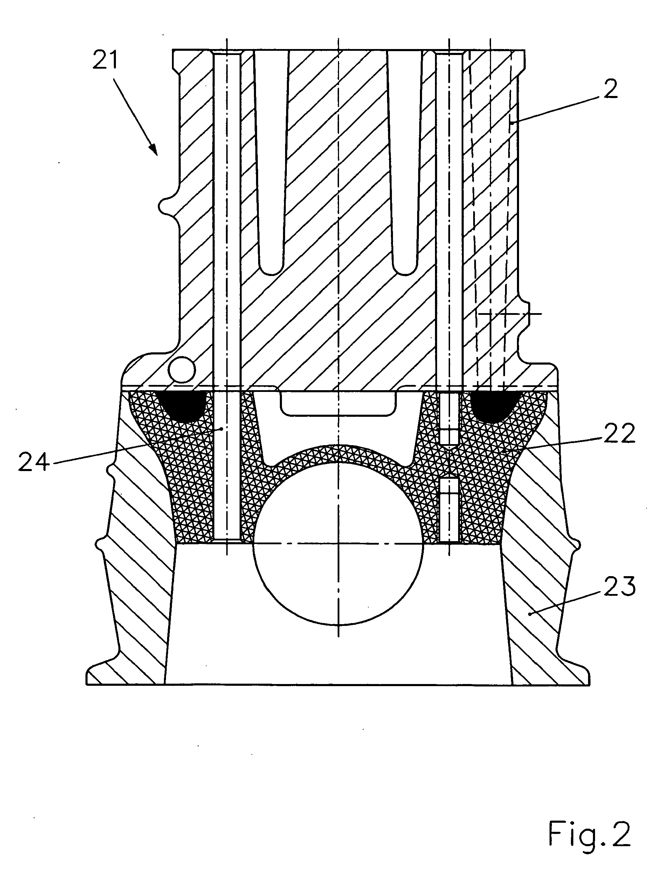

Das in der Figur 2 dargestellte Zylinderkurbelgehäuse 21 besitzt ebenfalls ein Verstärkungselement 22 im oberen Kurbelgehäuse 23, das aber entgegen dem Ausführungsbeispiel gemäß der Figur 1 mit einer Durchgangsöffnung 24 versehen ist, so dass ein Lagerdeckel unmittelbar mittels einer Schraube durch das Verstärkungselement 22 hindurch mit dem Zylinderblock 2 verschraubbar ist. Es liegt somit eine kombinierte Verschraubung vor. Kombiniert bedeutet hierbei, dass ein Verschrauben durch die Zylinderlaufflächen-Wasserraumeinheit 2 und ein Verschrauben des Lagerdeckels 7 mit dem hochfesten Bauteil 22 erfolgt. Die Figur 3 zeigt ein weiteres Ausführungsbeispiel eines erfindungsgemäßen Zylinderkurbelgehäuses 25 mit Durchgangsöffnungen 26, die auch Bohrungen sein können im Verstärkungsteil 27. Hierdurch ist es möglich, den Lagerdeckel 28 unmittelbar mit dem Zylinderblock 2 zu verschrauben.

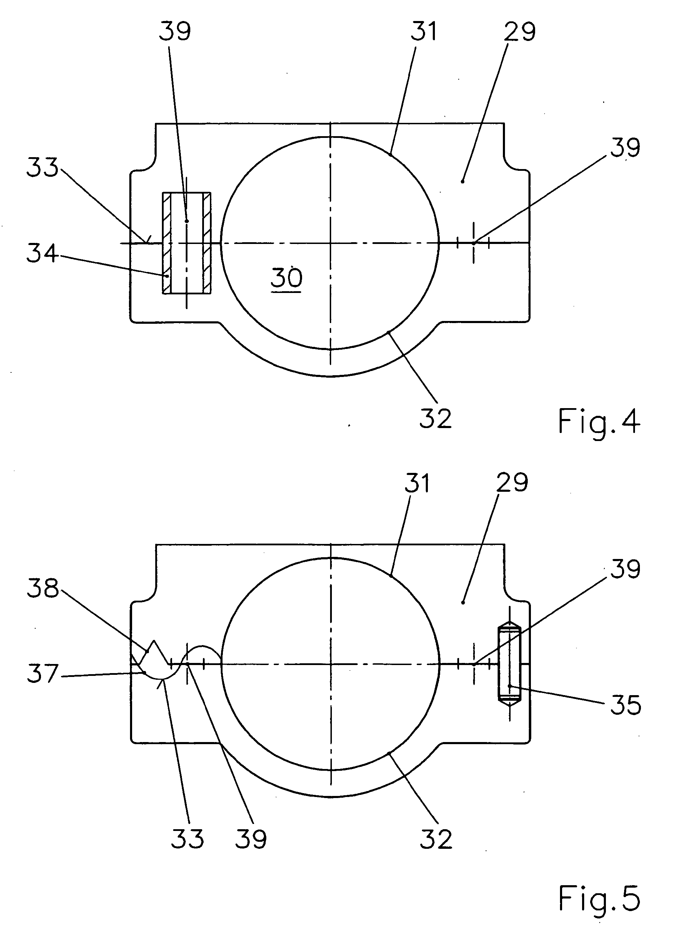

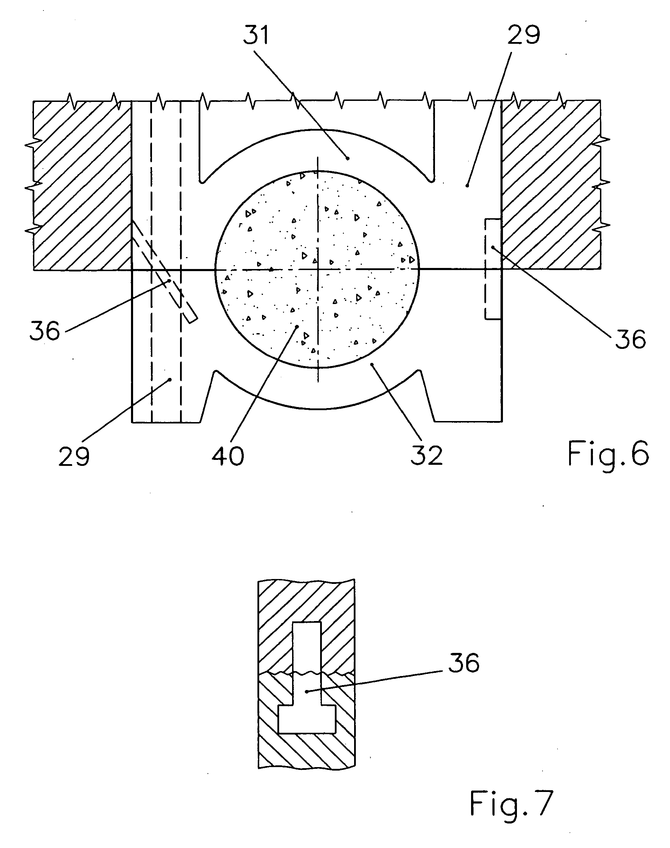

Das Verstärkungsteil 29 gemäß der Figur 4 wird als separates Bauteil 29 aus Grau-, Stahl- oder Kugelgraphitguss gegossen. Hierbei wird die Lagerstelle 30, bestehend aus Lagerstuhl 31 und Lagerdeckel 32 in einem Bauteil 29 gegossen. Anschließend wird das Verstärkungsteil 29 in der Ebene 33 getrennt. Das Trennen kann mittels Drahterodieren oder mittels eines Lasers oder mittels Hochdruckwasserschneiden erfolgen. Durch das nach dem Trennen erneute Zusammenfügen ergeben sich optimale Fügeflächen 33. Zum Halten des Lagerstuhls 31 und des Lagerdeckels 32 nach dem Trennen sind verschiedene Möglichkeiten vorstellbar. So ist einerseits das Einfügen einer Spannhülse 34, das Verbinden mittels eines Zylinderstiftes 35, gemäß der Figur 5, oder das Verbinden mittels einer Passfeder 36, gemäß der Figur 6 und 7, vorstellbar. Das Fügen des Verstärkungsteils 29 ist aber auch über formschlüssige Verbindungen 37, 38 möglich. So können während des Trennens des Lagerstuhls 31 und des Lagerdeckels 32 beliebige Formen als Fügeflächen 33 in die Hälften 31, 32 des Verstärkungsteils 29 eingebracht werden. Natürlich sind auch Kombinationen von den genannten Verbindungen vorstellbar.

Neben dem formschlüssigen Verbinden des Lagerstuhls 31 und des Lagerdeckels 32 ist ein Verkleben und/oder ein formschlüssiges Verbinden und/oder ein Verbinden mittels Hülsen 34 oder Zylinderstiften 35 oder Passfedern 36 ebenfalls vorstellbar.

Die Bereiche 39 kennzeichnen den Bereich des Verstärkungsteils 29, durch den der Lagerdeckel 32 mit dem oberen Kurbelgehäuse 3, 23 oder dem Zylinderblock 2 verschraubbar ist, in diesem Bereich liegen die Gewinde 19 oder die Durchgangsbohrungen 24, 26.

Eine weitere Aufgabe der Erfindung ist es ein Verfahren bereitzustellen, mittels dem ein erfindungsgemäßes Zylinderkurbelgehäuse kostengünstig und mit minimalsten Mitteln herstellbar ist.

Die Lösung der verfahrenstechnischen Aufgabe wird durch den Patentanspruch 8 bereitgestellt.

Durch das erfindungsgemäße Verfahren ist es möglich, ein erfindungsgemäßes Zylinderkurbelgehäuse kostengünstig und mit minimalsten Mitteln herzustellen. Hierzu wird die Lagergasse, das heißt die Verstärkungsteile 4, 22, 27, 29 separat gegossen, danach, wie oben beschrieben getrennt und wieder zusammengefügt und anschließend in eine Gießform für die Bildung eines oberen Kurbelgehäuses eingelegt. Zum Gießen wird die Lagerstelle 30 mit einem Formkern 40 gefüllt. Nach dem Umgießen des Verstärkungsteils 4, 22, 27, 29 ist der Lagerdeckel 32 dann wieder vom Lagerstuhl 31 trennbar.

Durch das erfindungsgemäße Verfahren wird ein Zylinderkurbelgehäuse bereitgestellt, das in den am stärksten beanspruchten Bereichen eine weit über die Festigkeit des Grundwerkstoffes des Zylinderkurbelgehäuses 1, 21, 25 hinausgehende Festigkeit aufweist. Insbesondere die Bereiche, in denen die Verschraubungen 15, 19 vorliegen, ist das Zylinderkurbelgehäuse 1, 21, 25 höchsten Anzugsmomenten gewachsen.

## Patentansprüche

1. Zylinderkurbelgehäuse aus Leichtmetall (5), insbesondere für Brennkraftmaschinen, mit mindestens einem Verstärkungsteil (4, 22, 27, 29) aus einem einzigen den Lagerstuhlbereich (6, 31) bildenden Eingussteil (6, 31) oder einzelnen den Lagerstuhlbereich (6, 31) bildenden Eingussteilen (6, 31), das oder die in das Zylinderkurbelgehäuse (1, 21, 25) eingegossen ist oder sind, wobei das Verstärkungsteil (4, 22, 27, 29) aus einem gegenüber dem Grundwerkstoff des Zylinderkurbelgehäuses (1, 21, 25) eine höhere Festigkeit aufweisenden Werkstoff gebildet ist, **dadurch gekennzeichnet, dass** das Zylinderkurbelgehäuse (1, 21, 25) aus einer separaten Zylinderlaufflächen-Wasserraumeinheit (2) und einem separaten Kurbelwellengehäuse (3, 23) gebildet ist.

2. Zylinderkurbelgehäuse nach Anspruch 1, **dadurch gekennzeichnet, dass** das Zylinderkurbelgehäuse (1, 21, 25) horizontal unterhalb der Zylinderlaufflächen geteilt ist.

3. Zylinderkurbelgehäuse nach einem der Ansprüche 1 und 2, **dadurch gekennzeichnet, dass** im oberen Kurbelwellengehäuse (3, 23) in Richtung des Zylinderblocks (2) und in das Verstärkungsteil (4, 22, 27, 29) Gewinde (15, 19) enthalten sind, so dass der Zylinderblock (2) mit dem Kurbelgehäuse (3, 23) verschraubbar ist.

4. Zylinderkurbelgehäuse nach einem der Ansprüche 1 und 2, **dadurch gekennzeichnet, dass** im Kurbelgehäuse (3, 23) und durch das Verstärkungsteil (22, 27) Durchgangslöcher (24, 26) enthalten sind, so dass der Zylinderblock (2) durch das Kurbelgehäuse (23) hindurch und mit einem die Lagerschale (31) bildenden Lagerdeckel (32) verschraubbar ist.

5. Zylinderkurbelgehäuse nach einem der Ansprüche 1 bis 4, **dadurch gekennzeichnet, dass** das Verstärkungsteil (4, 22, 27, 29) aus Grau-, Stahl- oder Kugelgraphitguss gebildet ist und das Kurbelwellengehäuse (3, 23) und die Zylinderlaufflächen-Wasserraumeinheit (2) aus einer Aluminium- und/oder Magnesiumlegierung gebildet ist.

6. Zylinderkurbelgehäuse nach einem der Ansprüche 1 bis 5, **dadurch gekennzeichnet, dass** das Verstärkungsteil (4, 22, 27, 29) aus einer einteilig gegossenen und getrennten Lagergasse (29) gebildet ist, wobei die Lagergasse (29) das Verstärkungsteil (31) und den Lagerdeckel (32) bildet.

7. Zylinderkurbelgehäuse nach einem der Ansprüche 1 bis 6, **dadurch gekennzeichnet, dass** die Trennfläche (33) der Lagergasse (29) aus einer geometrischen Form (37, 38), insbesondere einer Verzahnung (38) oder einer Wellenkontur (37) gebildet ist.

8. Verfahren zur Herstellung eines Zylinderkurbelgehäuses (1, 21, 25) gemäß einem der vorstehenden Ansprüche bei dem
- eine Lagergasse (6, 7, 22, 27, 29, 31, 32) gegossen wird,
- die Lagergasse (6, 7, 22, 27, 29, 31, 329 anschließend getrennt wird, so dass ein Verstärkungsteil (4, 22, 27, 31) und ein Lagerdeckel (7, 28, 32) gebildet wird,
- das Verstärkungsteil (4, 22, 27, 31) und der Lagerdeckel (7, 28, 32) zur Bildung der Lagergasse (4, 6, 7, 22, 27, 29, 31, 32) zusammengeführt werden,
- die Lagergasse (4, 6, 7, 22, 27, 29, 31, 32) in eine Gießform für ein oberes Kurbelgehäuse (3, 23) mit einem Zylinderblock (2) verschraubt wird.

9. Verfahren zur Herstellung eines Zylinderkurbelgehäuses (1, 21, 25), **dadurch gekennzeichnet, dass** die Lagergasse (4, 6, 7, 22, 27, 29, 31, 32) mittels eines Lasers oder mittels eines Drahterodierens oder mittels eines Hochdruckwasserstrahlverfahrens getrennt wird.

10. Verfahren zur Herstellung eines Zylinderkurbelgehäuses (1, 21, 25) nach einem der Ansprüche 8 und 9, **dadurch gekennzeichnet, dass** die Lagergasse (4, 6, 7, 22, 27, 29, 31, 32) beim Zusammenfügen verstiftet und/oder verklebt und/oder formschlüssig verbunden wird.

## Claims

1. A cylinder crankcase of light metal (5), in particular for internal combustion engines, comprising at least one reinforcing member (4, 22, 27, 29) formed by a single cast-in insert (6, 31) constituting the bearing seat portion (6, 31) or by individual cast-in inserts (6, 31) constituting the bearing seat portion (6, 31), which is or are cast into the cylinder crankcase (1, 21, 25), said reinforcing member (4, 22, 27, 29) being made from a material having a greater strength than the base material of the cylinder crankcase (1, 21, 25), **characterized in that** the cylinder crank case (1, 21, 25) is formed by a separate cylinder running surface water chamber unit (2) and a separate crankcase (3, 23).

2. The cylinder crankcase of claim 1, **characterized in that** said cylinder crankcase (1, 21, 25) is divided horizontally below the cylinder running surfaces.

3. The cylinder crankcase of one of claims 1 and 2, **characterized in that** the upper crankcase (3, 23) is provided with threads (15, 19) directed towards the cylinder block (2) and formed in the reinforcing member (4, 22, 27, 29), respectively, so that the cylinder block (2) can be bolted to the crankcase (3, 23).

4. The cylinder crankcase of one of claims 1 and 2, **characterized in that** through holes (24, 26) are provided in the crankcase (3, 23) and through the reinforcing member (22, 27), so that the cylinder block (2) can be bolted through said crankcase (23) and to a bearing cover (32) forming the bearing seat (31).

5. The cylinder crankcase of one of claims 1 to 4, **characterized in that** the reinforcing member (4, 22, 27, 29) is made from cast iron, cast steel or nodular graphite cast iron, and the crankcase (3, 23) and the cylinder running surface water chamber unit (2) are formed from an aluminum and/or a magnesium alloy.

6. The cylinder crankcase of one of claims 1 to 5, **characterized in that** the reinforcing member (4, 22, 27, 29) is formed by an integrally cast and separated bearing tunnel (29), said bearing tunnel (29) forming the reinforcing member (31) and the bearing cover (32).

7. The cylinder crankcase of one of claims 1 to 6, **characterized in that** the separation plane (33) of the bearing tunnel (29) is formed as a geometrical shape (37, 38), in particular a toothing (38) or a wave contour (37).

8. A method for producing a cylinder crankcase (1, 21, 25) of one of the preceding claims, wherein
- a bearing tunnel (6, 7, 22, 27, 29, 31, 32) is cast,
- said bearing tunnel (6, 7, 22, 27, 29, 31, 32) is subsequently separated so that a reinforcing member (4, 22, 27, 31) and a bearing cover (7, 28, 32) are formed,
- said reinforcing member (4, 22, 27, 31) and said bearing cover (7, 28, 32) are joined to form the bearing tunnel (4, 6, 7, 22, 27, 29, 31, 32),
- said bearing tunnel (4, 6, 7, 22, 27, 29, 31, 32) is bolted to a cylinder block (2) in a mould for an upper crankcase (3, 23).

9. The method for producing a cylinder crankcase (1, 21, 25), **characterized in that** the bearing tunnel (4, 6, 7, 22, 27, 29, 31, 32) is separated by means of a laser or by means of wire-cut EDM or by means of a highpressure water jet technique.

10. The method for producing a cylinder crankcase (1, 21, 25) of one of claims 8 and 9, **characterized in that**, upon joining, the bearing tunnel (4, 6, 7, 22, 27, 29, 31, 32) is pinned and/or glued and/or joined with positive fit.

## Revendications

1. Carter de vilebrequin de cylindre de métal léger (5), notamment pour moteurs à combustion interne, comprenant au moins un élément de renforcement (4, 22, 27, 29) formé d'un seul insert encastré (6, 31) faisant office de la partie du selle d'appui (6, 31) ou formé des inserts encastré individuels (6, 31) faisant office de la partie du selle d'appui (6, 31), le ou les inserts étant encastrés dans le carter de vilebrequin de cylindre (1, 21, 25), ledit élément de renforcement (4, 22, 27, 29) étant formé d'un matériau ayant une solidité supérieure à celle du matériau de base dudit carter de vilebrequin de cylindre, **caractérisé en ce que** ledit carter de vilebrequin de cylindre (1, 21, 25) est formé par une unité d'espace d'eau de la glace de cylindre (2) séparée et un carter de vilebrequin (3, 23) séparé.

2. Carter de vilebrequin de cylindre selon la revendication 1, **caractérisé en ce que** le carter de vilebrequin de cylindre (1, 21, 25) est divisé au-dessous des glaces de cylindre.

3. Carter de vilebrequin de cylindre selon l'une quelconque des revendications 1 et 2, **caractérisé en ce que** des filets (15, 19) sont ménagées dans le carter de vilebrequin (3, 23) supérieur, ledit filet étant orienté vers le bloc de cylindre (2), et dans ledit élément de renforcement (4, 22, 27, 29), de sorte que le bloc de cylindre (2) peut être vissé au carter de vilebrequin (3, 23).

4. Carter de vilebrequin de cylindre selon l'une quelconque des revendications 1 et 2, **caractérisé en ce que** des trous de passage (24, 26) sont ménagés dans le carter de vilebrequin (3, 23) et à travers ledit élément de renforcement (22, 27), de sorte que le bloc de cylindre (2) peut être vissé à travers le carter de vilebrequin (23) et à un chapeau de palier (32) formant le coussinet de palier (31).

5. Carter de vilebrequin de cylindre selon l'une quelconque des revendications 1 à 4, **caractérisé en ce que** ledit élément de renforcement (4, 22, 27, 29) est réalisé en fonte moulée, acier moulé ou fonte de graphite nodulaire, et ledit carter de vilebrequin (3, 23) et ladite unité d'espace d'eau de la glace de cylindre (2) sont réalisés en un alliage d'aluminium et/ou de magnésie.

6. Carter de vilebrequin de cylindre selon l'une quelconque des revendications 1 à 5, **caractérisé en ce que** ledit élément de renforcement (4, 22, 27, 29) est formé par un chemin de palier (29) moulé en une pièce et divisé, ledit chemin de palier (29) formant ledit élément de renforcement (31) et ledit chapeau de palier (32).

7. Carter de vilebrequin de cylindre selon l'une quelconque des revendications 1 à 6, **caractérisé en ce que** la surface de séparation (33) dudit chemin de palier (29) présente une forme géométrique (37, 38), notamment une dentelure (38) ou un contour d'onde (37).

8. Procédé de fabrication d'un carter de vilebrequin de cylindre (1, 21, 25) selon l'une quelconque des revendications précédentes, dans lequel
- un chemin de palier (6, 7, 22, 27, 29, 31, 32) est moulé,
- le chemin de palier (6, 7, 22, 27, 29, 31, 32) est séparé après, de sorte qu'un élément de renforcement (4, 22, 27, 31) et un capuchon de palier (7, 28, 32) sont formés,
- ledit élément de renforcement (4, 22, 27, 31) et ledit capuchon de palier (7, 28, 32) sont rejoints pour former ledit chemin de palier (4, 6, 7, 22, 27, 29, 31, 32),
- ledit palier de chemin (4, 6, 7, 22, 27, 29, 31, 32) est vissé à un bloc de cylindre (2) dans une moule pour un carter de vilebrequin (3, 23).

9. Procédé de production d'un carter de vilebrequin de cylindre (1, 21, 25) selon la revendication 8, **caractérisé en ce que** ledit chemin de palier (4, 6, 7, 22, 27, 29, 31, 32) est séparé au moyen d'un laser ou au moyen d'électro-corrosion par fils ou au moyen d'une technique de jet d'eau à haute pression.

10. Procédé de production d'un carter de vilebrequin de cylindre (1, 21, 25) selon l'une quelconque des revendications 8 et 9, **caractérisé en ce que** lors de son assemblage, ledit chemin de palier (4, 6, 7, 22, 27, 29, 31, 32) est goujonné et/ou collé et/ou joint par engagement positif.
